# EUROPEAN PATENT APPLICATION

(11) **EP 0 663 657 A1**
(43) Date of publication of application: **19.07.1995**
(21) Application number: 95200113.9
(22) Date of filing: 17.01.1995
(51) Int. Cl.: G08B 13/24, G09F 27/00

(54) **Anti-theft detection and identification system**

(71) Applicant: N.V. Nederlandsche Apparatenfabriek NEDAP, NL-7141 DE Groenlo (NL)
(72) Inventor: Hogen Esch, Johannes Harm Lukas, NL-7122 ZN Aalten (NL)
(74) Representative: Smulders, Theodorus A.H.J., Ir.

(57) **Abstract**

The invention relates to a system comprising a theft detection device for generating an electromagnetic detection field in a control zone and for detecting the presence of anti-theft labels in the control zone. An anti-theft label radiates an electromagnetic response signal when it is located in the control zone. The system further comprises an identification device for generating an interrogation field in an identification zone and for identifying identification labels which are located in the identification zone. Here an identification label radiates an electromagnetic identification signal coded with an identity when the label is located in the identification zone. The theft detection device and the identification device are connected with at least one common antenna array for generating the detection field, for generating the interrogation field, for detecting the response signal and for detecting the identification signal. The control zone and the identification zone overlap each other partly in a common detection zone.

## Description

The invention relates to a system, in combination comprising a theft detection device for generating an electromagnetic detection field in a control zone and for detecting the presence of anti-theft labels in the control zone, an anti-theft label radiating an electromagnetic response signal when it is located in the control zone, and an identification device for generating an interrogation field in an identification zone and for identifying identification labels which are located in the identification zone, an identification label radiating an electromagnetic identification signal coded with an identity when it is located in the identification zone, while the theft detection device and the identification device comprise at least one common antenna array for generating the detection field, for generating the interrogation field, for detecting the response signal and for detecting the identification signal, the control zone and the identification zone overlapping each other at least partly in a common detection zone.

A particular aspect of the system according to the invention is that the antenna array is employed both for detecting anti-theft labels and for identifying identification labels which are located in a common detection zone. With the system according to the invention, the antenna devices which are arranged, for instance, at the exit of a store or a different space to be protected are used not only for recognizing anti-theft labels which are attached to articles to be protected but also for recognizing identification labels by which individual persons or groups of persons can be identified.

The system may for instance be advantageously used to control theft from stores, offices, hotels or exhibition spaces. At the same time, the system can be used to recognize identification labels, for instance of persons, for identifying these persons. After identification of a person or group of persons, for instance access to a particular space can be granted.

The detection takes place by radiating and receiving electromagnetic signals via the antenna device, while the interference with these signals by the anti-theft or identification labels associated with the system can be detected and converted in either an alert signal or a coded signal corresponding with the identity of the identification label.

The advantage of a detection system according to the invention is that special offers can be brought to the attention of persons, individually or groupwise, who carry, for instance, an economy pass with an identification label. This can already happen at the moment when these persons enter a store, for instance via video screens arranged at the entrance of a store.

It is also possible to bring these offers into line with the registered buying behaviour of a relevant person or of a relevant group of persons.

Another application is the combination of a theft control system and an access granting system, whereby the persons are identified to gain access and whereby further goods provided with labels, which are not to be appropriated, are detected.

According to a particular embodiment of the system according to the invention, the antenna array is located in one detection pillar. Such detection pillars can for instance be arranged at the exit of a store, hotel or a different space to be protected. European patent application 507352 also describes an anti-theft device with an antenna array located in a detection pillar. Here, the antenna array located within a detection pillar exclusively functions as transmitting antenna or as receiving antenna. A combination of a transmitting and receiving antenna in one pillar, however, is not described. Moreover, the European patent application does not describe a combination with an anti-theft device and an identification device.

One of the problems arising when several antenna systems for identifying labels are arranged in mutual proximity is cross-talk of signals from one system to the other, giving rise to one system influencing the other and the possibility of false alarm being generated.

In the system according to the invention, this problem is obviated by providing the antenna array with a first and second antenna, with the resultant of the signal induced by one antenna in the other being zero. This can be done, for instance, by choosing on the transmitter side an 8-shape for the antenna of the theft control system and an O-shape for the antenna of the identification system. On the receiver side the antenna shapes for each system can be precisely the reverse. In this case a transmitting antenna of one system is then combined with a receiving antenna of the other system.

This technique for suppressing cross-talk in antennas is also described, and in more detail, in applicant's Dutch patent application no. 8900658. In this way two antenna systems functioning at different frequencies can be united in one antenna pillar without any disturbance.

More generally the antenna array comprises a first and a second loop antenna positioned substantially in one plane or in parallel planes located at a short distance from each other, the first loop antenna generating the detection field and the second loop antenna generating the interrogation field, in such a manner that the first and second loop antenna are at least substantially not inductively coupled to each other. What is thus achieved is that an electromagnetic field radiated by the first loop antenna does not generate a signal in the second loop antenna while an electromagnetic field radiated by the second loop antenna does not generate a signal in the first loop antenna. The theft detection device and the identification device then do not influence each other despite the use of a common antenna array or detection pillar.

In particular, the theft detection device and the identification device are each of the transmission type, which is known per se, with the first loop antenna functioning as transmitting antenna for the theft detection device and as receiving antenna for the identification device and with the second loop antenna functioning as transmitting antenna for the identification device and as receiving antenna for the theft detection device. Each loop antenna here forms part of the theft detection device and the identification device without the two devices interfering with each other.

According to an alternative embodiment of the system, the theft detection device and the identification device are each of the absorption type, with the first loop antenna functioning as transmitting and receiving antenna for the theft detection device and with the second loop antenna functioning as transmitting and receiving antenna for the identification device. According to this variant, too, the theft detection device and the identification device will not interfere with each other, since the first and second loop antenna are at least substantially not inductively coupled to each other.

In particular, the cross-talk between the first and second loop antenna can be suppressed when the first loop antenna comprises at least one current loop, with the second loop antenna comprising more current loops than the first loop antenna. Here, for instance the first loop antenna can comprise one current loop, with the second loop antenna being designed as an 8-shaped antenna comprising two current loops. European patent application 387970 describes the use of an O-shaped antenna and an 8-shaped antenna in an anti-theft device. However, it is not known from European patent application 387970 to use these antennas in combination in an antenna array or in a detection pillar nor is it known to use these antennas simultaneously in an identification device as well as an anti-theft device. Nor is it known from European patent application 387970 to provide an anti-theft device of the absorption type with such an antenna array.

Electromagnetic detection systems comprising antennas which generate a field in a detection zone and which detect a response of a label in the same detection zone are increasingly subject to electromagnetic compatibility requirements or EMC requirements, imposing limitations on the one hand on the electromagnetic field which the (transmitting) antenna produces at a substantial distance outside the detection zone and on the other on the sensitivity of the (receiving) antenna to interfering fields of extern sources.

To meet the above-mentioned problems, use is made of the 8-shaped antenna. The coupling of fields at a distance is then much smaller because the fields of the two halves of the 8-shaped antenna compensate each other at a distance. An 8-shaped antenna which is used as a transmitting antenna will therefore generate a negligibly weak electromagnetic field at a substantial distance.

A disadvantage of the configuration with the O-shaped antenna is that it still generates a relatively strong electromagnetic field at a distance. If the O-shaped antenna is also used as a receiving antenna, a receiver which is connected with the O-shaped antenna will also be sensitive to fields radiated at a substantial distance, so that the sensitivity of the receiver is limited.

To meet these problems, the first loop antenna preferably comprises at least two current loops. If in that case the second loop antenna moreover comprises more current loops than the first loop antenna, the cross-talk between the first and the second loop antenna will be very slight, while it holds for both loop antennas that they do not generate an electromagnetic field at a substantial distance. In use the current loops then have a current distribution such that the far magnetic fields generated by the current loops compensate each other.

One possible embodiment of the system which comprises all the above-mentioned advantages in combination is characterized in that the first loop antenna comprises at least a first and second current loop, while in use a current flows through the first current loop with a direction of rotation which is opposite to the direction of rotation of a current flowing through the second current loop; and that the second loop antenna comprises at least a fourth, fifth and sixth current loop, while the fourth current loop is located between the third and fifth current loop and in use a current flows through the fourth current loop with a direction of rotation which is opposite to the direction of rotation of the currents respectively flowing through the third and fifth current loop.

It is also possible to combine a theft control system as described in applicant's Dutch patent application 9300991 with a coded modulation technique in the case of identification labels, as described in European patent application 576100, likewise in applicant's name. Here the two systems function at the same frequency and operate by the same detection principle and will therefore not influence or disturb each other. For that matter, European patent application 576100 does not describe a combination of a theft detection device and an identification device.

With the system according to the invention it is for instance possible for the information about persons with an identification label as obtained by the identification device to be subjected to a further processing in order to grant access to a person or group of persons and/or to provide information about special offers or offers in line with the buying behaviour of the relevant person or group of persons.

The invention will now be further explained with reference to the drawing. In the drawing:
Fig. 1 shows a first embodiment of a system according to the invention;
Fig. 2 shows a second embodiment of a system according to the invention;
Fig. 3 shows a first detailed embodiment of a system according to Fig. 1 or 2;
Fig. 4 shows a second detailed embodiment of a system according to Fig. 1 or 2;
Fig. 5 shows a third detailed embodiment of a system according to Fig. 1 or 2.

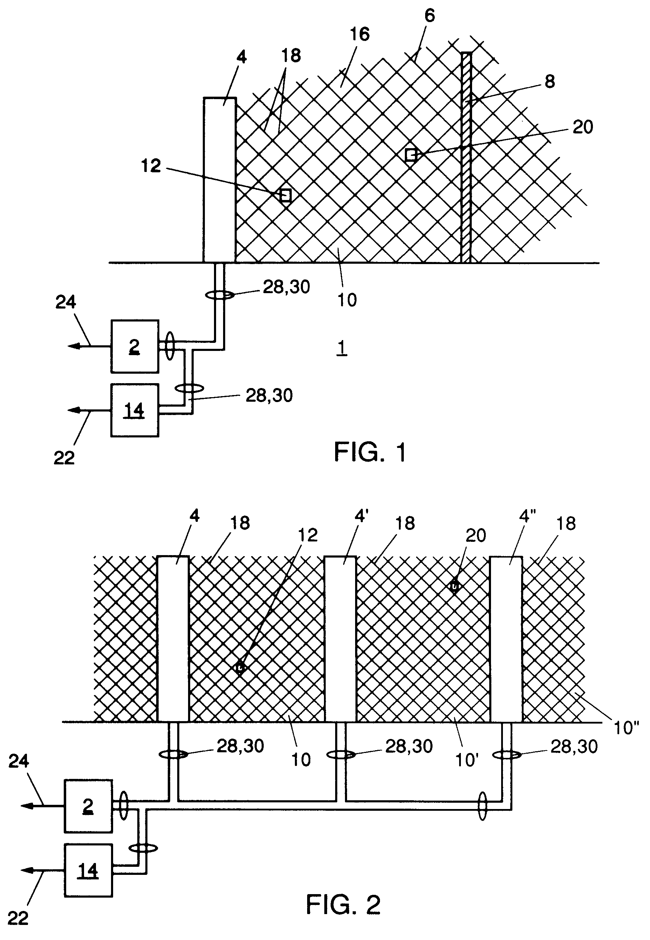

In Fig. 1 reference character 1 designates a system according to the invention. The system comprises an anti-theft device 2, known per se, which is connected with an antenna array which is located in a detection pillar 4. By means of the antenna array of the detection pillar 4 the anti-theft device generates a detection field in a control zone 6. In this example the control zone 6 is hatched with lines slanting down from left to right. In this example, in the control zone 6 a partition 8 is arranged on a side located opposite the detection pillar 4. Located between the partition 8 and the detection pillar 4 is, for instance, an exit 10 of a store. A passive anti-theft label 12 comprising a resonant circuit consisting, for instance, of a coil and a capacitor, will generate a secondary magnetic alternating field at those instants when an instantaneous frequency of the electromagnetic detection field is equal to the resonance frequency of the label 12, as soon as this label is introduced into the field of the detection pillar 4. This secondary alternating field can then be received with the aid of the antenna array located in the detection pillar 4. The thus received signal of the secondary magnetic alternating field is detected by the anti-theft device 2, whereafter it can for instance activate an alarm to indicate that an article to which the anti-theft label 12 is attached is located in the control zone 6.

According to the invention, the system further comprises an identification device 14 which is likewise connected with the antenna array of the detection pillar 4. With the aid of the detection pillar 4 the identification device generates an electromagnetic interrogation field in an identification zone 16. In the drawing the identification zone 16 is hatched with lines slanting up from left to right. According to the invention, the control zone 6 and the identification zone 16 overlap each other in the common detection zone 18, which is depicted in the drawing with a double hatching. When an identification label 20 is introduced into the identification or detection zone, the label will react to the interrogation field by radiating an electromagnetic identification signal coded with an identity. With the aid of the antenna array present in the detection pillar 4, the radiated signal will be detected by an identification device 14. For that purpose, the identification device 14 is provided with means which are known per se. Thus the identity of a person who is carrying the identification label 20 on him can be determined. The thus determined identity of a person or group of persons can be presented on line 22 for further processing. When the system is used in a store, it is for instance possible, on the basis of a person's established identity, to activate a video screen which gives information about particular offers in the store which might be of interest to the person in question. Simultaneously, for instance an alert signal can be generated on line 24 when an article of the store which is provided with an anti-theft label 12 threatens to leave the store through the exit 12.

As will be further explained hereinbelow, the anti-theft device 2 and the identification device 14 can be of the transmission type as well as of the absorption type.

In accordance with the invention, the system can also be employed to provide more passages 10 with a detection zone 18. In Fig. 2 parts corresponding with Fig. 1 are provided with the same reference numeral. The anti-theft device 2 is connected with a number of detection pillars 4, 4', 4'', which are connected in parallel. Each of the detection pillars 4, 4', 4'' is connected with the identification device 14 in the same manner as discussed in relation to Fig. 1. What all this boils down to is that an electromagnetic detection field and an electromagnetic interrogation field are generated in a detection zone 18 at least encompassing the exits 10, 10' and 10''. An anti-theft label 12 or an identification label 20 which is located in the detection zone 18 can be detected in the same manner as described in relation to Fig. 1.

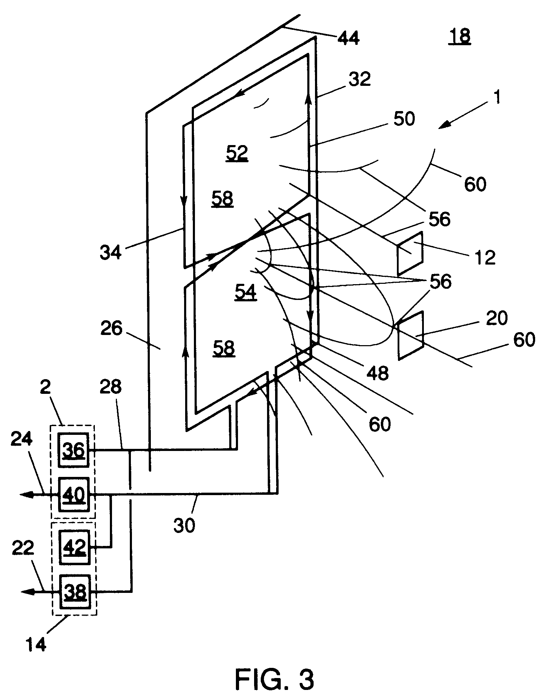

Fig. 3 shows a further elaboration of a system of Fig. 1, where the anti-theft device 2 and the identification device 14 are designed according to the transmission type. Accommodated in the antenna pillar 4 (not shown in Fig. 3) is the antenna array 26, which is connected through lines 28, 30 with the anti-theft device 2 and the identification device 14. In this example the antenna array 26 comprises a first loop antenna 32 which is of O-shaped design. The antenna array 26 further comprises a second loop antenna 34 which is of 8-shaped design. The second loop antenna 34 is connected with a transmitter unit 36 of the anti-theft device 2 by way of a line 28. By way of line 28, the second loop antenna 34 is moreover connected with a receiver unit 38 of the identification device 14. The O-shaped first loop antenna is connected with a receiver unit 40 of the anti-theft device 2 by way of line 30. By way of the line 30, the O-shaped first loop antenna 32 is moreover connected with a transmitter unit 42 of the identification device 14. In this example the first loop antenna 32 and the second loop antenna 34 are disposed at least substantially in the same flat plane 44. However, it is also possible for the two antennas to be disposed in two at least substantially parallel non-coinciding flat planes. These two flat planes are then arranged so close to each other that the two loop antennas can be accommodated in one detection pillar. The distance between the planes in which the first and second loop antenna, respectively, are disposed can for instance be smaller than a greatest diameter of a current loop of a loop antenna. The 8-shaped second loop antenna 34 comprises a first current loop 48 and a second current loop 50. As stated, in this example both current loops are included in the flat plane 44 which is diagrammatically represented in the drawing. The first current loop 48 encloses a first surface 52, while the second current loop 50 encloses a second surface 54. The current loops of the second loop antenna 34 are wound in such a manner that the current through the first current loop has a direction of rotation which is opposite to the direction of rotation of the current which flows through the second current loop. If the second loop antenna 34 functions as transmitting antenna, an electromagnetic field will be radiated which is designated in the drawing by reference numeral 56. The magnitude of this field will be negligible at a relatively substantial distance.

In this example the first loop antenna 32 comprises only one current loop, which encloses a surface 58. The surface 58 overlaps at least partly the aforementioned surfaces 52 and 54. If the first O-shaped loop antenna 32 functions as transmitting antenna, an electromagnetic field will be radiated which is designated in the drawing by reference numeral 60. As appears clearly from the drawing, the magnetic field direction of the field 56 is at a number of points in the detection zone at least substantially orthogonal with respect to the magnetic field direction of the field 60. It appears further that the field 56 which is generated by the 8-shaped second loop antenna 34 will not generate an induction voltage in the O-shaped first loop antenna 32. It moreover appears from the drawing that the field 60 generated by the first loop antenna will not generate an induction voltage in the 8-shaped second loop antenna 34. Accordingly, the first and second loop antenna are at least substantially not inductively coupled to each other.

The operation of this system is as follows. With the aid of the transmitter unit 36, by means of the 8-shaped second loop antenna 34 a detection field 56 is generated in the detection zone 18. An anti-theft label 12 which is located in the detection zone 18 will react to this by radiating an electromagnetic response signal. The electromagnetic response signal which is radiated by the anti-theft label 12 will induce an induction voltage in the O-shaped first loop antenna 32. This induction voltage will, by way of line 30, be detected by the receiver unit 40 of the anti-theft device 2, whereafter the receiver unit 40 can for instance deliver an alert signal on line 24. Simultaneously, with the aid of the transmitter unit 42 of the identification device 14, by means of the first O-shape loop antenna 32 an interrogation field 60 is generated in the detection zone 18. An identification label 20, known per se, which is located in the detection zone 18 will react to the interrogation field 60 by radiating an electromagnetic identification signal coded with an identity. The identification signal radiated by the label 20 will generate an induction voltage in the 8-shaped second loop antenna. Accordingly, the receiver unit 38 will receive the identification signal by way of the 8-shaped second loop antenna 34 and process it further. For that purpose the receiver unit 38 comprises means which are known per se and will for instance deliver a signal on line 22 which represents the identity of the identification label in question. Detection of the identification signal by the receiver unit 38 is not disturbed by the detection field 56 in that the latter does not generate an induction voltage in the second loop antenna. Conversely, detection of the response signal by the receiving unit 40 will not be disturbed by the interrogation field 60 in that the latter does not generate an induction voltage in the O-shaped first loop antenna 32.

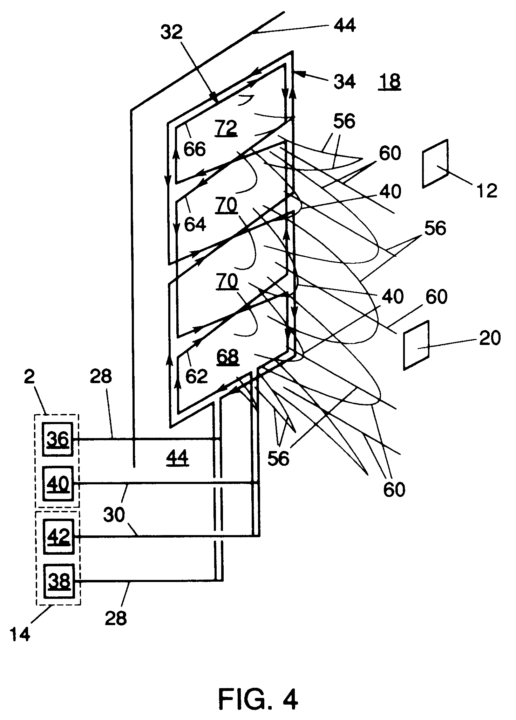

Fig. 4 shows an alternative embodiment of the system, where parts corresponding with Fig. 3 are provided with the same reference numeral. The system according to Fig. 4 corresponds with the system according to Fig. 3, except that the first loop antenna 32 comprises three current loops in this example. More particularly, the first loop antenna 32 according to Fig. 4 consists of a rectangle having a cross connection at, respectively, a quarter and three quarters of the height of the rectangle. The first loop antenna 32 thus comprises a third current loop 62, a fourth current loop 64 and a fifth current loop 66. The third current loop 62 encloses a third surface 68, the fourth current loop 64 encloses a fourth surface 70 and the fifth current loop 66 encloses a fifth surface 72. The current loops 62, 64 and 66 are wound in such a manner that the direction of rotation of a current through the fourth current loop 64 has a direction which is opposite to the direction of rotation of a current through the third current loop 62 and the fifth current loop 66. As a consequence of all this, an electromagnetic field 56 is generated which has a negligibly small value at a substantial distance because the field generated by the fourth current loop 64 will be compensated at a substantial distance by the fields which are generated by the third current loop 62 and the fifth current loop 66, respectively. With the system according to Fig. 4, therefore, it holds for the detection field 56 as well as for the interrogation field 60 that they will be negligibly small at a substantial distance. Electromagnetic compatibility requirements or EMC requirements are thus met. Conversely, this means that it holds both for the first loop antenna 32 and for the second loop antenna 34 that they are insensitive to electromagnetic fields radiated at a substantial distance. Because the first loop antenna 32 functions as receiving antenna for the anti-theft device 2 and the second loop antenna 34 functions as receiving antenna for the identification device 14, it holds that the receiver unit 40 and the receiver unit 38 will sustain substantially no interference from electromagnetic fields radiated at substantial distances. It moreover holds again, as discussed in relation to Fig. 3, that the detection field 56 radiated by the second loop antenna will not generate an induction voltage in the first loop antenna 32. Further, the interrogation field 60 radiated by the first loop antenna 32 will not generate an induction voltage in the second loop antenna 34. The operation of the system is otherwise entirely analogous to that described in relation to Fig. 3. Accordingly, the first loop antenna 32 functions as transmitting antenna for the identification device 14 and as receiving antenna for the anti-theft device 2. Further, the second loop antenna 34 functions as transmitting antenna for the anti-theft device 2 and as receiving antenna for the identification device 14.

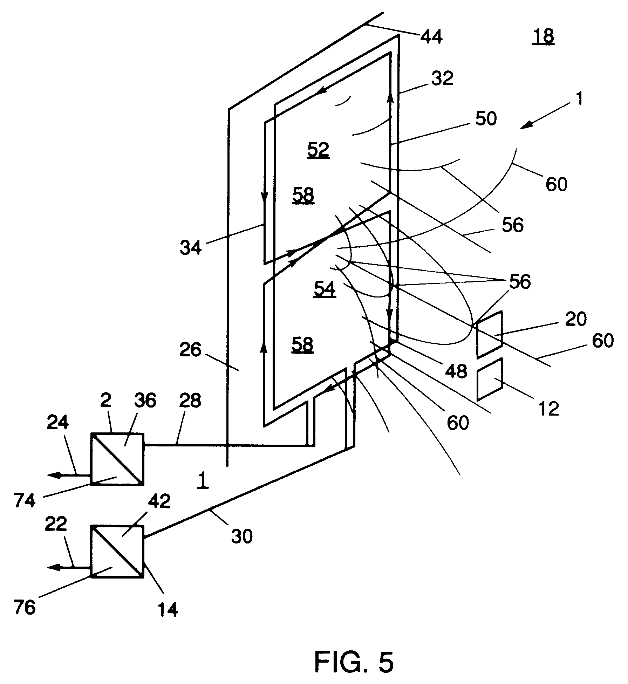

Fig. 5 shows an alternative embodiment of the system 1 according to the invention, where the same antenna array 26 as described in relation to Fig. 3 is used. However, the theft detection device 2 is of the absorption type. Here, the anti-theft device 2 is connected through line 28 with the 8-shaped second loop antenna 34, which second loop antenna 34 now functions as transmitting and receiving antenna of the anti-theft device 2. Further, the identification device 14 is likewise designed as a device of the absorption type. Here the identification device 14 is connected through line 30 with the O-shaped first loop antenna 32. The first loop antenna 32 now functions as transmitting and receiving antenna for the identification device 14. The anti-theft device 2 is of a generally known type and operates as follows. By means of the anti-theft device 2 a detection field 56 is generated in the detection zone 18, as described in relation to Fig. 3. An anti-theft label 12 which is located in the detection zone 18 will react to this by radiating a response signal, which interferes with the detection field. The anti-theft device 2 comprises a detector 74, known per se, which detects energy being absorbed from the detection field 56 by an anti-theft label. In this connection, it is essential that the 8-shaped second loop antenna 34 for this purpose functions as receiving antenna for the anti-theft device 2. Simultaneously, by means of the identification device 14 in co-operation with the first loop antenna 32 the interrogation field 60 is generated in the detection zone 18. Here the identification device 14 is also of the absorption type, known per se. An identification label 20 which is located in the detection zone 18 will react to this by radiating a coded identification signal, which interferes with the interrogation field. The identification device 14 further comprises a detector 76, which detects an identification label absorbing energy from the interrogation field in coded manner. Essential is that the identification device 14 uses the first loop antenna as receiving antenna. The detector 76 can then generate on line 22 an output signal which comprises the detected code of the identification label in question. It holds again that the first loop antenna 32 and the second loop antenna 34 are not inductively coupled to each other. This means that the detection field 56 will not cause an induction voltage in the first loop antenna, while the interrogation field 60 will not cause an induction voltage in the second loop antenna 34. This also enables the antenna array 26 to be accommodated in one detection pillar 4.

It will be clear that the first loop antenna 32 of Fig. 5 can be replaced by the loop antenna 32 of Fig. 4, which comprises three current loops. This again provides the advantage that the interrogation field radiated by the first loop antenna is at least substantially naught at a substantial distance. In this connection, 'substantial distance' can for instance be understood to mean a distance which is many times greater than the greatest diameter of a current loop of a loop antenna. For the sake of completeness, it is further observed that the anti-theft device 2 can be equipped as described in Dutch patent application 9300991. In addition, the identification device 14 can be equipped as described in Dutch patent application 9201116. Both systems then function at the same frequency and operate by the same detection principle and will therefore not influence or disturb each other. In general, of course, it is also possible for the anti-theft device 2 and the identification device 14 to operate at mutually different frequencies. The anti-theft labels and the identification labels can be both of the active and of he passive type. It will typically be preferred to use passive labels comprising a resonant circuit having a resonance frequency corresponding with the frequency of the detection field and the interrogation field, respectively. Also, an 8-shaped antenna can be obtained as described in Dutch patent application 9100397. In addition a first loop antenna 32 comprising three or more current loops can be obtained, as is set out in European patent application 93202073.8. In the system according to Fig. 3, 4 or 5 it is also possible to interchange the first and second loop antennas. These and other variants are all understood to fall within the scope of the invention.

## Claims

1. A system, in combination comprising a theft detection device for generating an electromagnetic detection field in a control zone and for detecting the presence of anti-theft labels in the control zone, an anti-theft label radiating an electromagnetic response signal when it is located in the control zone, and an identification device for generating an interrogation field in an identification zone and for identifying identification labels which are located in the identification zone, an identification label radiating an electromagnetic identification signal coded with an identity when it is located in the identification zone, while the theft detection device and the identification device are connected with at least one common antenna array for generating the detection field, for generating the interrogation field, for detecting the response signal and for detecting the identification signal, the control zone and the identification zone overlapping each other at least partly in a common detection zone.

2. A system according to claim 1, characterized in that the antenna array is located in one detection pillar.

3. A system according to any one of the preceding claims, characterized in that the antenna array comprises a first and a second loop antenna disposed substantially in one plane or in parallel planes located at a short distance from each other, the first loop antenna generating the detection field and the second loop antenna generating the interrogation field, in such a manner that the first and second loop antenna are at least substantially not inductively coupled to each other.

4. A system according to claim 3, characterized in that the theft detection device and the identification device are each of the transmission type, with the first loop antenna functioning as transmitting antenna for the theft detection device and as receiving antenna for the identification device, and with the second loop antenna functioning as transmitting antenna for the identification device and as receiving antenna for the theft detection device.

5. A system according to claim 3, characterized in that the theft detection device and the identification device are each of the absorption type, with the first loop antenna functioning as transmitting and receiving antenna for the theft detection device and with the second loop antenna functioning as transmitting and receiving antenna for the identification device.

6. A system according to claim 3, 4 or 5, characterized in that the first loop antenna comprises at least one current loop, and the second loop antenna comprises more current loops than the first loop antenna.

7. A system according to claim 6, characterized in that the first loop antenna comprises one current loop and the second loop antenna is an 8-shaped antenna which comprises two current loops.

8. A system according to claim 6, characterized in that the first loop antenna comprises at least two current loops.

9. A system according to claim 8, characterized in that in use the current loops have such a current distribution that the far magnetic fields generated by the current loops compensate each other.

10. A system according to any one of claims 6-9, characterized in that each current loop of the second loop antenna encloses a surface which coincides at least partly with at least one surface which is enclosed by a current loop of the first loop antenna.

11. A system according to any one of the preceding claims 3-10, characterized in that in parts of the detection zone the detection field generated by the first loop antenna is at least substantially orthogonal with respect to the interrogation field generated by the second loop antenna.

12. A system according to claim 8 or 9, characterized in that the first loop antenna comprises at least a first and second current loop, while in use a current flows through the first current loop with a direction of rotation which is opposite to the direction of rotation of a current which flows through the second current loop; and that the second loop antenna comprises at least a third, fourth and fifth current loop, the fourth current loop being located in between the third and fifth current loop, while in use a current flows through the fourth current loop with a direction of rotation which is opposite to the direction of rotation of the currents flowing through the third and fifth current loops, respectively.

13. A system according to any one of the preceding claims, characterized in that information about persons with an identification label as obtained by the identification device is subjected to a further processing to grant access to a person or group of persons and/or to furnish information about special offers or offers which are in line with the buying behaviour of the person or group of persons in question.
